Europäisches Patentamt

European Patent Office

Office européen des brevets

(11) Veröffentlichungsnummer: **0 408 885 A2**

# EUROPÄISCHE PATENTANMELDUNG

(21) Anmeldenummer: 90110959.5

(51) Int. Cl.5: **B60J 7/053**

(22) Anmeldetag: 09.06.90

(30) Priorität: 21.07.89 DE 3924035

(43) Veröffentlichungstag der Anmeldung:
23.01.91 Patentblatt 91/04

(84) Benannte Vertragsstaaten:
DE ES FR GB IT NL SE

(71) Anmelder: Webasto AG Fahrzeugtechnik
Kraillingerstrasse 5
D-8035 Stockdorf(DE)

(72) Erfinder: Schreiter, Thomas
Hochmeierstrasse 6
D-8000 München 70(DE)
Erfinder: Reihl, Peter
Gerlichstrasse 3
D-8000 München 60(DE)
Erfinder: Miklosi, Stefan
Fochensteinstrasse 27
D-8000 München 90(DE)
Erfinder: Reinsch, Burkhard
Karwendelstrasse 4
D-8027 Neuried(DE)
Erfinder: Wingen, Bernhard
Höhenrainerstrasse 3
D-8152 Feldkirchen(DE)
Erfinder: Paetz, Werner
Hittostrasse 10
D-8050 Freising(DE)
Erfinder: Fürst, Arpad
Geschwister Scholl Ring 35
D-8034 Germering(DE)

(54) Fahrzeugdach mit zweiteiligem Deckel.

(57) Fahrzeugdach mit einem Deckel, der ein vordere und ein hinteres Deckelteil aufweist, die in einer Schließstellung gemeinsam einen in der festen Dachhaut ausgebildeten Dachausschnitt verschließen. Das hintere Deckelteil ist entlang von zu beiden Seiten des Dachausschnittes verlaufenden Längsführungen nach hinten in eine den Dachausschnitt mindestens teilweise freilegende Offenstellung verschiebbar. Das vordere Deckelteil ist gegenüber dem hinteren Deckelteil in eine Lüftungsstellung verschwenkbar. In der Lüftungsstellung ist die Vorderkante des vorderen Deckelteils unter Ausbildung eines im Bereich der Vorderkante des Dachausschnittes liegenden Lüftungsspaltes unter die feste Dachhaut abgesenkt, während die Hinterkante des vorderen Deckelteils mindestens näherungsweise in Höhe der Vorderkante des hinteren Deckelteils gehalten ist.

FIG. 2

13 23 14 15

22

EP 0 408 885 A2

Die Erfindung bezieht sich auf ein Fahrzeugdach mit einem Deckel, der ein vorderes und ein hinteres Deckelteil aufweist, die in einer Schließstellung gemeinsam einen in der festen Dachhaut ausgebildeten Dachausschnitt verschließen, wobei das hintere Deckelteil entlang von zu beiden Seiten des Dachausschnittes verlaufenden Längsführungen nach hinten in eine den Dachausschnitt mindestens teilweise freilegende Offenstellung verschiebbar ist und wobei das vordere Deckelteil gegenüber dem in seiner vorderen Endstellung stehenden und mit der Dachhaut abschließenden hinteren Deckelteil in eine Lüftungsstellung verschwenkbar ist.

Bei einem bekannten Fahrzeugdach dieser Art ist das vordere Deckelteil um eine dachfeste Achse verschwenkbar, die ein kurzes Stück hinter der Vorderkante des vorderen Deckelteils liegt. In der Lüftungsstellung ist die Hinterkante des vorderen Deckelteils gegenüber der festen Dachhaut und dem hinteren Deckelteil nach oben ausgestellt, wobei ein oberhalb der Dachfläche liegender Lüftungsspalt zwischen der Hinterkante des vorderen Deckelteils und der Vorderkante des hinteren Deckelteils ausgebildet wird. Im Falle eines solchen bekannten Fahrzeugdaches werden bei in die Lüftungsstellung hochgeschwenktem vorderem Deckelteil die aerodynamischen Eigenschaften des Fahrzeuges insbesondere bei hohen Fahrgeschwindigkeiten nachteilig beeinflußt. Aerodynamisch noch ungünstiger sind sogenannte Spoilerdächer, bei denen ein einteiliger Deckel nach dem Ausschwenken in eine Lüfterstellung oberhalb der festen Dachhaut nach hinten geschoben werden kann (DE-OS 33 11 452).

Zum Stand der Technik gemäß § 3, Abs. 2 PatG gehört ferner das in der Patentanmeldung P 38 07 961.5 beschriebene Lüfterdach mit einem in einer festen Dachhaut ausgebildeten Dachausschnitt, der mittels einteiligen Deckels verschließbar ist, der beidseits mit einer vordere und hintere Höhenverstelleinrichtungen aufweisenden Stellmechanik in Wirkungsverbindung steht, wobei der einteilige Deckel mittels der vorderen Höhenverstelleinrichtungen ausgehend von der Schließstellung um eine an oder nahe seiner Hinterkante liegende Schwenkachse in eine Lüfterstellung verschwenkbar ist, in welcher die Deckelvorderkante in Abstand unterhalb der Dachebene liegt, während die Deckelhinterkante mindestens näherungsweise in Höhe der festen Dachhaut gehalten wird, wobei der Deckel mittels der hinteren Höhenverstelleinrichtungen mit seiner Hinterkante unter die feste Dachhaut absenkbar ist, und wobei der abgesenkte Deckel mittels eines Antriebs entlang von dachfesten Längsführungen mindestens näherungsweise parallel zu der festen Dachhaut nach hinten unter die Dachhaut in eine Offenstellung verschiebbar ist, in welcher der Deckel den Dachausschnitt mindestens teilweise freilegt. Eine solche Dachkonstruktion gestattet eine wirkungsvolle Entlüftung ohne Beeinträchtigung der aerodynamischen Eigenschaften des Fahrzeuges auch bei rascher Fahrt. Im Falle von niedrigbauenden Fahrzeugen kann es jedoch unter Umständen zu Problemen hinsichtlich der Kopffreiheit in der Lüftungsstellung kommen.

Der im Anspruch 1 angegebenen Erfindung liegt die Aufgabe zugrunde, ein Fahrzeugdach der eingangs genannten Art zu schaffen, das besonders günstige aerodynamische Eigenschaften hat, ohne daß darunter die Kopffreiheit leidet.

Bei einem Fahrzeugdach mit den Merkmalen des Oberbegriffts des Patentanspruchs 1 wird diese Aufgabe erfindungsgemäß dadurch gelöst, daß in der Lüftungsstellung die Vorderkante des vorderen Deckelteils unter Ausbildung eines im Bereich der Vorderkante des Dachausschnittes liegenden Lüftungsspaltes unter die feste Dachhaut abgesenkt ist, während die Hinterkante des vorderen Deckelteils mindestens näherungsweise in Höhe der Vorderkante des hinteren Deckelteils gehalten ist.

Ist Falle des Fahrzeugdaches nach der Erfindung ragen in allen möglichen Deckelstellungen praktisch keine Deckelteile über die Dachfläche nach oben vor. Dies gewährleistet ein aerodynamisch günstiges Fahrverhalten insbesondere bei hohen Fahrgeschwindigkeiten. In der Lüftungsstellung werden störende Windgeräusche vermieden oder im Vergleich zu den vorbekannten Dächern mindestens wesentlich vermindert. Die Ausbildung des Lüftungsspaltes im Bereich der Vorderkante des Dachausschnittes ist lüftungstechnisch von Vorteil für ein Enteisen und das Beseitigen von Beschlag auf der Frontscheibe. Fahrer und Beifahrer werden durch den in der Lüfterstellung des Deckels entstehenden Luftzug nicht belästigt.

Im Vergleich zu dem nicht vorveröffentlichten Stand der Technik gemäß Patentanmeldung P 38 07 961.5 wird in der Lüftungsstellung der über dem Kopf des Fahrers und gegebenenfalls Beifahrers befindliche hintere Deckelteil nicht abgesenkt, wodurch dort auch in der Lüftungsstellung die volle Kopffreiheit erhalten bleibt. Die durch das Absenken des vorderen Deckelteils entstehenden keilförmiggen Seitenspalte beschränken sich auf den vorderen Bereich des Deckels, was zur Verminderung der Windgeräusche weiter beiträgt. Die Lüfterstellung ist optisch unauffällig, weil in dieser Stellung der hintere Deckelteil mit der festen Dachhaut optisch eine Einheit bildet. Die Größe des Lüftungsspaltes läßt sich großzügiger bemessen, da dies keinen Einfluß auf die Kopffreiheit hat.

In weiterer Ausgestaltung der Erfindung ist das vordere Deckelteil mit dem hinteren Deckelteil derart gekoppelt, daß es die Verschiebebewegungen des hinteren Deckelteils in Fahrzeuglängsrichtung mitmacht, wobei vorzugsweise beide Deckelteile gemeinsam unter den an den Dachausschnitt hinten angrenzenden Teil der Dachhaut verschiebbar sind. Dadurch wird es möglich, unter Beibehaltung aerodynamisch günstiger Eigenschaften einen im Vergleich zu der Lösung nach der DE-OS 35 22 781 größeren Teil des Dachausschnittes freizulegen, wodurch dem Fahrer ein cabrioletähnliches Fahrgefühl vermittelt wird.

Vorteilhaft sind die beiden in Fahrzeuglängsrichtung verschiebbaren Deckelteile im Bereich ihrer einander zugewendeten Enden gelenkig miteinander verbunden, wobei zweckmäßig ein nachgiebiges Dichtelement vorgesehen ist, das sich im Bereich der einander zugewendeten Enden der Deckelteil über deren gesamte Breite erstreckt und den Randspalt zwischen den beiden Deckelteilen in allen Deckelstellungen wasserdicht abdichtet. Dadurch wird Dichtproblemen an der Treffstelle der beiden Deckelteile besonders wirkungsvoll vorgebeugt. Zu einer einwandfreien Abdichtung des Fahrzeugdaches trägt ferner bei, wenn der zweiteilige Deckel eine an seinem Außenrand umlaufende Dichtung trägt, die in der Schließstellung den Rand des Dachausschnitts untergreift.

Zur Erzielung einer relativ einfachen, robusten und zuverlässigen Stellmechanik trägt bei, wenn das vordere Deckelteil mit einem Antrieb ständig verbunden ist, während das hintere Deckelteil mit dem Antrieb über eine Totgang-Mitnehmerkupplung in Verbindung steht. Vorzugsweise greift am vorderen Bereich des vorderen Deckelteils beidseitig jeweils ein Absenkhebel an, der mittels des Antriebs verschwenkt werden kann und dessen von dem vorderen Deckelteil abliegendes Ende an einem längsverschiebbaren Schlitten angelenkt ist, der zweckmäßig entlang einer Bahn längsverschiebbar ist, die einen nach vorne abfallenden vorderen Abschnitt aufweist.

Entsprechend einer weiteren Ausgestaltung der Erfindung ist eine Verriegelungsvorrichtung vorgesehen, welche das hintere Deckelteil in der Deckelschließstellung und während Schwenkbewegungen des vorderen Deckelteils zwischen der Schließstellung und der Lüftungsstellung gegen ein Längsverschieben mit Bezug auf den Dachausschnitt sichert. Dadurch werden unerwünschte Verlagerungen des hinteren Deckelteils sicher vermieden.

Zweckmäßig greift am hinteren Bereich des hinteren Deckelteils beidseitig jeweils ein Ausstellhebel an, dessen von dem hinteren Deckelteil abliegendes Ende an einem Schlitten angelenkt ist, der entlang der betreffenden Längsführung verschiebbar geführt ist.

In weiterer Ausgestaltung der Erfindung ist der Totgang-Mitnehmerkupplung und der Verriegelungsvorrichtung ein Raststein gemeinsam, der in dem Schlitten quer zu dessen Verschieberichtung verstellbar gelagert ist und der unter dem Einfluß des Antriebs den Schlitten wechselweise in lösbare Formschlußverbindung mit einem mit dem Antrieb ständig verbundenen, entlang der Längsführung verschiebbaren Schieber bzw. einem dachfesten Teil bringt.

Der Deckel läßt sich im hinteren Bereich besonders sicher halten, wenn der Ausstellhebel eine mindestens näherungsweise lotrechte Stellung einnimmt, solange der Deckel in seiner vorderen Endstellung steht.

Der Gesamtaufbau wird bei hoher Stabilität weiter vereinfacht, wenn der Ausstellhebel mit dem Deckel oder einem deckelfestern Teil über einen Bolzen verbunden ist, der bei abgesenkter Hinterkante des hinteren Deckelteils mit einer Führungsbahn der Längsführung in Eingriff kommt.

Die Länge des vorderen Deckelteils beträgt zweckmäßig zwischen 10 und 30 %, vorzugsweise etwa 20 %, der Gesamtlänge des Deckels.

Ausführungsbeispiele der Erfindung sind im folgenden anhand der Zeichnung näher erläutert. Dabei zeigen:

Fig. 1 bis 3 schematische perspektivische Gesamtansichten des Fahrzeugdaches mit in unterschiedlichen Stellungen stehendem Deckel,

Fig. 4 eine Draufsicht auf den linken Teil des Fahrzeugdaches bei in der Schließstellung stehendem Deckel,

Fig. 5a und 5b einen schematischen Längsschnitt des Fahrzeugdaches im Bereich der Verstellmechanik bei in der Schließstellung stehendem Deckel,

Fig. 6a, 6b und 6c schematische Längsschnitte entsprechend den Fign. 5a und 5b bei in der Lüftungsstellung stehendem Deckel,

Fig. 7a und 7b einen Längsschnitt entsprechend den Fign. 5a und 5b bei in die Verschiebestellung gebrachtem und teilweise zurückgeschobenem Deckel,

Fig. 8a und 8b einen Längsschnitt im Bereich der Deckelteile bei in der Schließstellung stehendem Deckel,

Fig. 9 einem Längsschnitt entsprechend Fig. 8a bei in der Lüftungsstellung stehendem Deckel,

Fig. 10 den Schnitt entlang der Linie X-X der Fig. 4, und

Fig. 11 den Schnitt entlang der Linie XI-XI der Fig. 4.

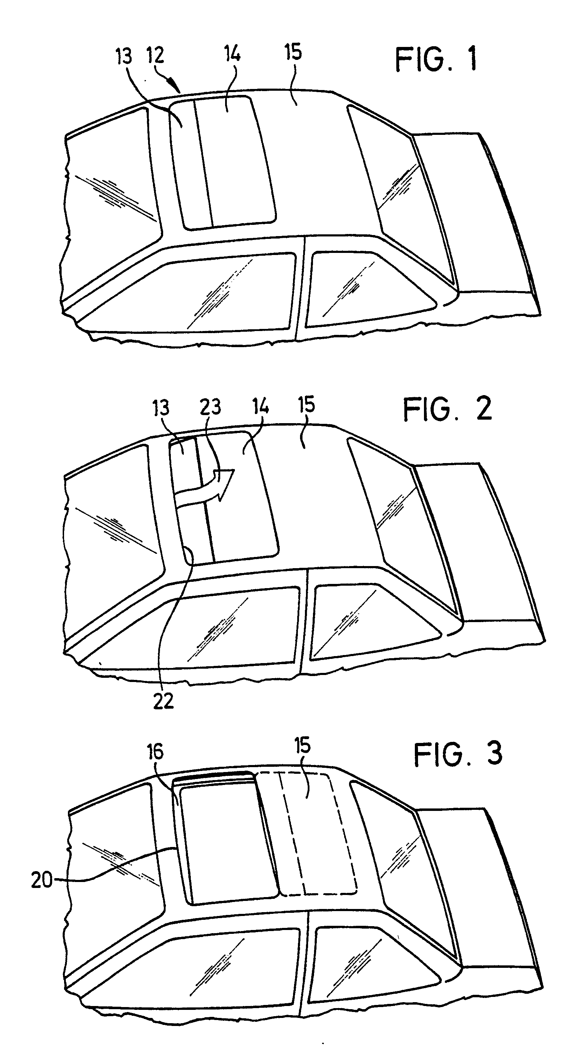

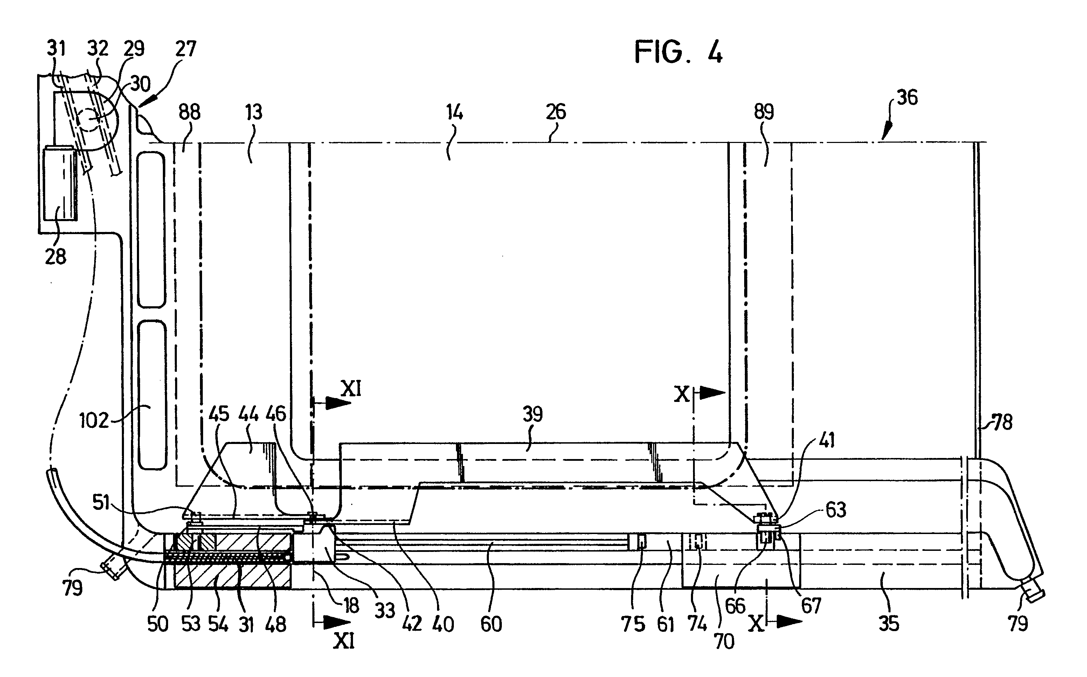

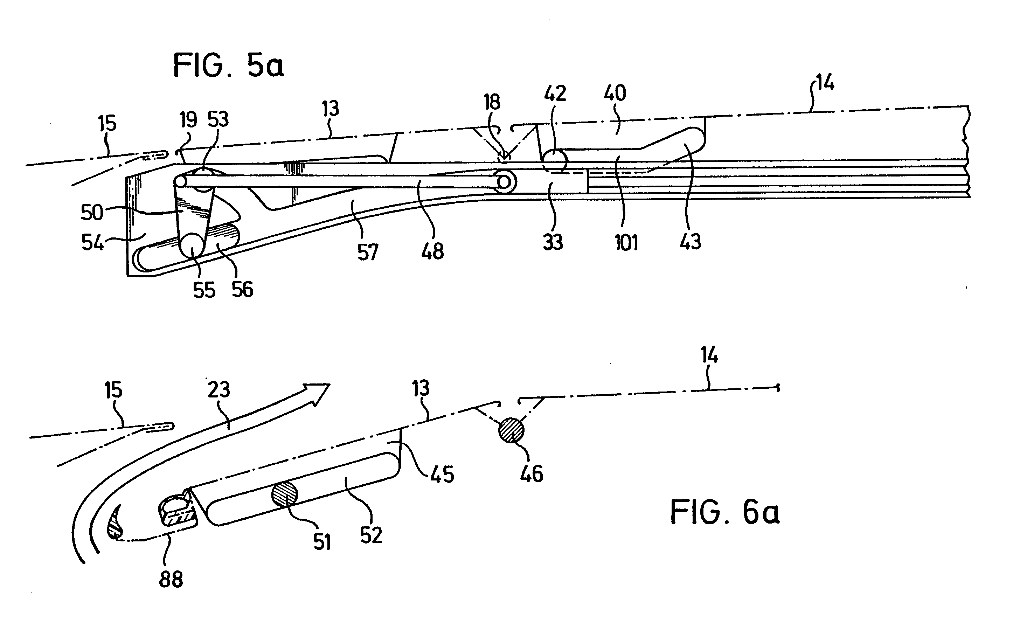

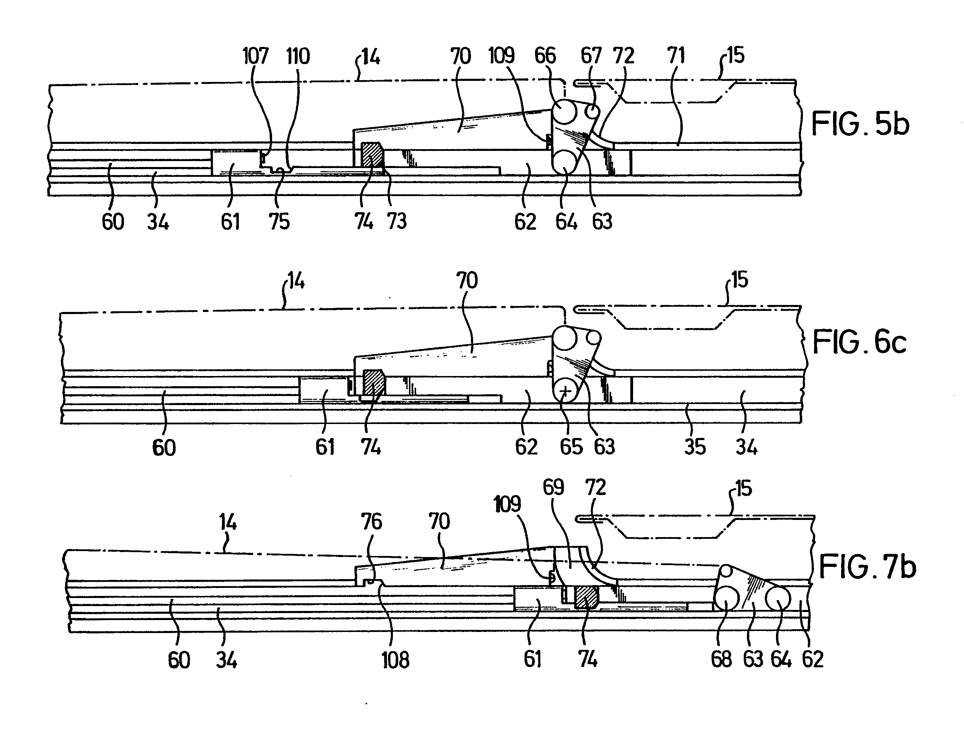

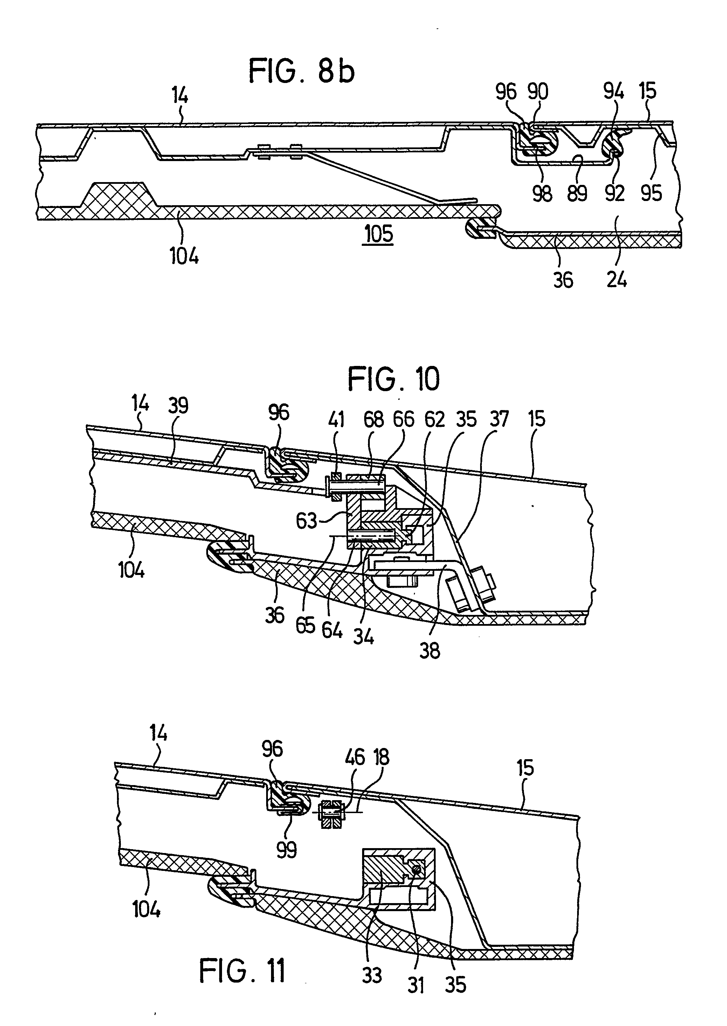

Das in den Fign. 1 bis 3 schematisch dargestellt Fahrzeugdach weist einen Dekkel 12 mit einem kürzeren vorderen Deckelteil 13 und einem längeren hinteren Deckelteil 14 auf. In einer Schließstellung verschließen die Deckelteile 13, 14 gemeinsam einen in einer festen Dachhaut 15 ausgebildeten Dachausschnitt 16 (Fign. 1, 5a und 5b). Die beiden Deckelteile 13 und 14 sind im Bereich ihrer einander zugewendeten Enden gelenkig miteinander verbunden. Während das hintere Deckelteil 14 in seiner vorderen Endstellung steht und mit der Dachhauf 15 im wesentlichen bündig abschließt, kann das vordere Deckelteil 13 um eine an oder nahe seiner Hinterkante 17 liegende, waagrecht und quer zur Fahrzeuglängsrichtung liegende Schwenkachse 18 (Fign. 4 und 11) in eine Lüftungsstellung verschwenkt werden. In dieser Lüftungsstellung ist die Vorderkante 19 des vorderen Deckelteils 13 im Bereich der Vorderkante 20 des Dachausschnitts 16 unter die feste Dachhaut 15 abgesenkt, während die Hinterkante 17 des vorderen Deckelteils mindestens näherungsweise in Höhe der Vorderkante 21 des hinteren Deckelteils 14 gehalten ist. Dabei wird im Bereich der Vorderkante 20 des Dachausschnitts 16 ein Lüftungsspalt 22 ausgebildet. Wenn während der Fahrt des Fahrzeuges an der Außenseite der Dachhaut 15 ein Unterdruck gegenüber dem im Fahrgastraum herrschenden Druck entsteht, bildet sich ein durch den Lüftungsspalt 22 hindurchtretender Luftstrom 23 aus, über den das Wageninnere wirkungsvoll entlüftet wird (Fign. 2, 6a, 6b und 9). Der Deckel 12 kann aber auch als Ganzes nach hinten in eine Offenstellung (Fig. 3) geschoben werden, in welcher er den Dachausschnitt 16 mindestens teilweise freilegt. Bei der veranschaulichten Ausführungsform werden die Deckelteile 13 und 14 dabei in einem an den Dachausschnitt 16 nach hinten anschließenden Raum 24 unterhalb der Dachhaut 15 aufgenommen.

Die nachstehend im einzelnen näher erläuterte Verstellmechanik des Deckels 12 ist im wesentlichen spiegelsymmetrisch zu einer Längssymmetrieachse 26 ausgebildet. Infolgedessen reicht die Beschreibung für die eine Dachseite aus. Aufbau und Funktionsweise auf der anderen Dachseite stimmen damit im wesentlichen überein. Die Begriffe "vorne" und "hinten" beziehen sich vorliegend auf die Vorwärtsfahrtrichtung des Fahrzeuges, in welches das Dach eingebaut ist.

Zum Verstellen des Deckels 12 ist ein Antrieb 27 vorgesehen, der im veranschaulichten Ausführungsbeispiel einen Elektromotor 28 mit nachgeschaltetem Untersetzungsgetriebe 29 aufweist. Es versteht sich, daß stattdessen beispielsweise auch ein Handkurbelantrieb vorgesehen sein kann. Ein Antriebsritzel 30 des Antriebs 27 steht mit zwei zug- und drucksteifen Antriebskabeln 31 und 32 in Eingriff. Mit dem Antriebskable 31 ist ein Antriebsschlitten 33 verbunden, während das Antriebskabel 32 mit einem entsprechenden Antriebsschlitten auf der anderen Dachseite in Verbindung steht. Der Antriebsschlitten 33 ist entlang einer Führungsbahn 34 einer Längsführung 35 verschiebbar geführt, bei der es sich im veranschaulichten Ausführungsbeispiel um eine Führungsschiene handelt, dei Teil eines unter der Dachhaut 15 angeordneten Rahmens 36 ist. Bei der veranschaulichten Ausführungsform besteht der Rahmen 36 aus den auf beiden Seiten des Dachausschnittes 16 angeordneten, vorzugsweise metallischen Führungsschienen sowie aus einer vorderen und einer hinteren Querstrebe 77 bzw. 78. Die Querstreben 77 und 78 sorgen für die gegenseitige Verbindung der Führungsschiene, und sie können zweckmäßig als Kunststoffformteile mit Wasserabläufen 79 ausgebildet sein. Stattdessen kann aber z.B. auch ein einteiliger Blech- oder Kunststoffrahmen vorgesehen sein, in welchem die Fäührungsbahnen 345 integriert sind oder auf den gesonderte Bauteile zur Bildung der Führungsbahnen aufgesetzt sind. Der Rahmen 36 ist mit dachfesten Verstärkungsgliedern 37 über Befestigungselemente 38 verbunden.

An dem hinteren Deckelteil 14 ist ein abgewinkeltes Verbindungsblech 39 fest angebracht, das nach außen über das Deckelteil 14 vorsteht und dort im wesentlichen lotrecht verlaufende Stege 40 und 41 trägt. Ein an dem Antriebsschlitten 33 angebrachter Verbindungsbolzen 42 greift in einen Kulissenschlitz 43 des vorderen Verbindungsblech-Steges 40 ein. An der Unterseite des vorderen Deckelteils 13 ist ein über das Deckelteil seitlich vorspringendes vorderes Verbindungsblech 44 mit einem lotrechten Steg 45 angebracht. Die Stege 40 und 45 der Verbindungsbleche 39 bzw. 44 sind über einen Gelenkbolzen 46 miteinander verbunden, welcher zusammen mit einem entsprechenden Gelenkbolzen auf der anderen Dachseite die waagrechte Schwenkachse 18 bestimmt.

Die Antriebsschlitten 33 ist über ein Gelenk 47 mit dem hinteren Ende eines nach vorne reichenden Stellhebels 48 verbunden. Der Stellhebel 48 steht seinerseits an seinem vorderen Ende über ein Gelenk 49 mit einem Absenkhebel 50 in Verbindung. Der Absenkhebel 50 trägt einen nach innen weisenden Verbindungsbolzen 51, der in einem Langloch 52 des Steges 45 des vorderen Verbindungsblechs 44 verschiebbar geführt ist (Fig. 6a). Von der anderen Seite des Absenkhebels 50 steht nach außen ein Sperrbolzen 53 vor, der mit einem an die Längsführung 35 nach vorne anschließenden, dachfesten Einstazteil 54 zusammenwirkt. Das von dem Gelenk 49 und dem Sperrbolzen 53 abliegende Ende des Absenkhebels 50 ist über ein weiteres Gelenk 55 mit einem vorderen Schlitten 56 verbunden, der entlang der Führungsbahn 34 und einer daran nach vorne anschließenden Laufbahn 57 des Einsatzteils 54 verschiebbar geführt ist. Die Laufbahn 57 ist ausgehend vom vorderen Ende der Führungsbahn 34 nach vorne und unten geneigt (vergleiche beispielsweise Fig. 5a). In die Laufbahn 57 mündet oben eine gleichfalls von dem Einsatzteil 54 gebildete Sperrkulisse 58 ein.

Der Antriebsschlitten 33 steht ferner über eine Verbindungsleiste 60 mit einem in der Führungsbahn 34 der Längsführung 35 verschiebbar geführten Schieber 61 in fester Verbindung. Hinter dem Schieber 61 ist in der Führungsbahn 34 ein hinterer Schlitten 62 verschiebbar geführt. Das eine Ende eines Ausstellhebels 63 ist mit dem Schlitten 62 über ein Gelenk 64 für eine Schwenkbewegung um eine waagrechte Achse 65 verbunden, die von dem Gelenk 64 und einem entsprechenden Gelenk auf der gegenüberliegenden Dachseite bestimmt wird. Der Ausstellhebel 63 trägt im Bereich seines von dem Gelenk 64 abliegenden Endes einen Ausstellbolzen 66 und einen Ausstellhilfsbolzen 67. Der Ausstellbolzen 66 sorgt für eine Gelenkverbindung des Ausstellhebels 63 mit dem Steg 41 des hinteren Verbindungsbleches 39. Auf dem von dem Steg 41 abgewendeten Ende des Ausstellbolzens 66 ist eine Rolle 68 drehbar gelagert. Die Rolle 68 greift in die Führungsbahn 34 der Längsführung 35 bzw. in eine nach vorne und oben gekrümmte, in die Führungsbahn 34 einmündende Führungsbahn 69 eines Einsatzteils 70 ein, das auf die Längsführung 39 aufgesetzt und mit dieser fest verbunden ist. Der Ausstellhilfsbolzen 67 gleitet entlang einem oberen Schenkel 71 der Längsführung 35 und einer daran anschließenden Nockenbahn 72 des Einsatzteils 70. In einer Durchgangsöffnung 73 des hinteren Schlittens 62 ist ein Raststein 74 quer zur Verschieberichtung des Schlittens 62 verstellbar geführt. Der Raststein 74 kann sich mit seinem einen oder seinem anderen Ende wechselweise in eine Raststeinkerbe 75 des Schiebers 61 oder eine Raststeinkerbe 76 des Einsatzteils 70 einlegen.

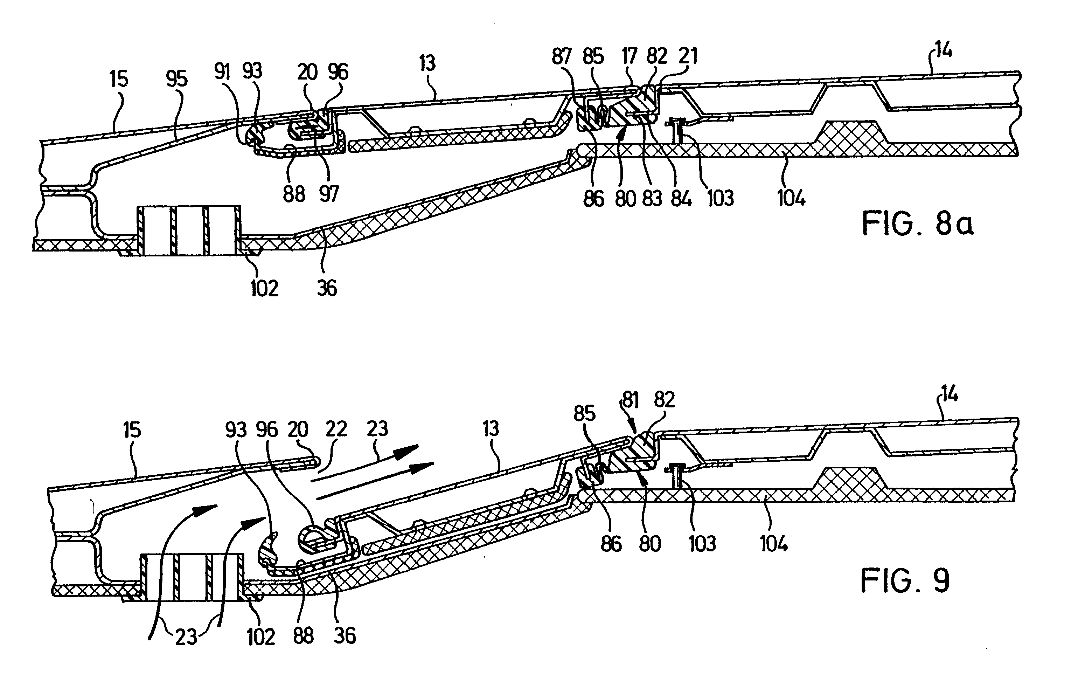

Wie insbesondere aus den Fign. 8a und 9 zu erkennen ist, sind die beiden Deckelteile 13 und 14 über ein nachgiebiges Dichtelement 80 untereinander verbunden, das sich im Bereich der einander zugewendeten Enden der Deckelteile 13 und 14 über deren gesamte Breite erstreckt und den Randspalt 81 zwischen den beiden Deckelteilen 13 und 14 in allen Deckelstellungen wasserdicht abdichtet. Durch das Dichtelement 80 wird der Randspalt 81 verdeckt. Das Dichtelement 80 weist einen Hauptkörper 82 mit einem im wesentlichen horizontan verlaufenden Spalt 83 auf, in den ein gegenüber der Oberseite des Deckelteils 14 nach unten abge setzter, vorspringender Flansch 84 des Deckelteils 14 eingreift. Der Hauptkörper 82 ist über ein gewelltes Zwischenstück 85 mit einer vorderen Befestigungsleiste 86 einstückig verbunden. Die Befestigungsleiste 86 ist auf einen nach unten abgewinkelten, gegenüber der Hinterkante 17 nach vorne versetzten Flansch 87 des vorderen Deckelteils 13 aufgesteckt. Auf diese Weise untergreift das Dichtelement 80 das hintere Ende des vorderen Deckelteils 13.

Der zweiteilige Deckel 12 trägt vorne und hinten eine Wasserrinne 88 bzw. 89 (vergleiche insbesondere Fign. 4, 8a und 8b). In der Deckelschließstellung erstreckt sich die vordere Wasserrinne 88 unter den vorderen Rand 20 des Dachausschnitts 16, während die hintere Wasserrinne 89 den hinteren Rand 90 des Dachausschnitts untergreift. Auf einen äußeren Randflansch 91 bzw. 92 der Wasserrinnen 88 und 89 ist jeweils ein Dichtungsstreifen 93 bzw. 94 aufgesteckt, der sich in der Deckelschließstellung gegen die Unterseite der festen Dachhaut 15 oder ein Dachverstärkungsteil 95 anlegt. Entlang dem Außenrand des zweiteiligen Deckels 12 erstreckt sich eine umlaufende Dichtung 96. Die Dichtung 96 ist auf gegenüber der Deckeloberseite nach unten abgesetzte, vorspringende Randflansche 97 und 98 des vorderen Deckelteils 13 bzw. des hinteren Deckelteils 14 aufgesetzt; sie wird in der Deckelschließstellung von unten gegen den Rand des Dachausschnittes 16 angepreßt. Die Dichtung ist mit einer relativ steifen Einlage 99 in Form eines Rüstbandes, einer Klemmleiste oder dergleichen ausgestattet. Wie insbesondere aus Fig. 11 hervorgeht, liegt die Schwenkachse 18 in gleicher Höhe oder nahezu gleicher Höhe wie der der Schwenkachse benachbarte Teil der Einlage 99.

Die Wirkungsweise des vorliegend beschriebenen Daches ist wie folgt:

In der Schließstellung gemäß den Fign. 1, 4, 5a, 5b, 8a, 8b und 10 nehmen bedie Deckelteile 13, 14 ihre vordere Endstellung ein, und ihre Oberseiten verlaufen mindestens nahezu bündig zu der Oberseite der festen Dachhauf 15. Die Dichtungsstreifen 93 und 94 sowie die Dichtung 96 sind von unten gegen das feste Dach angedrückt, weil der Absenkhebel 50 und der Ausstellhebel 63 ihre aufgestellte Lage einnehmen, während gleichzeitig der Verbindungsbolzen 42 am vorderen Ende eines parallel zu der Führungsbahn 34 verlaufenden vorderen Abschnitts 101 des Kulissenschlitzes 43 steht.

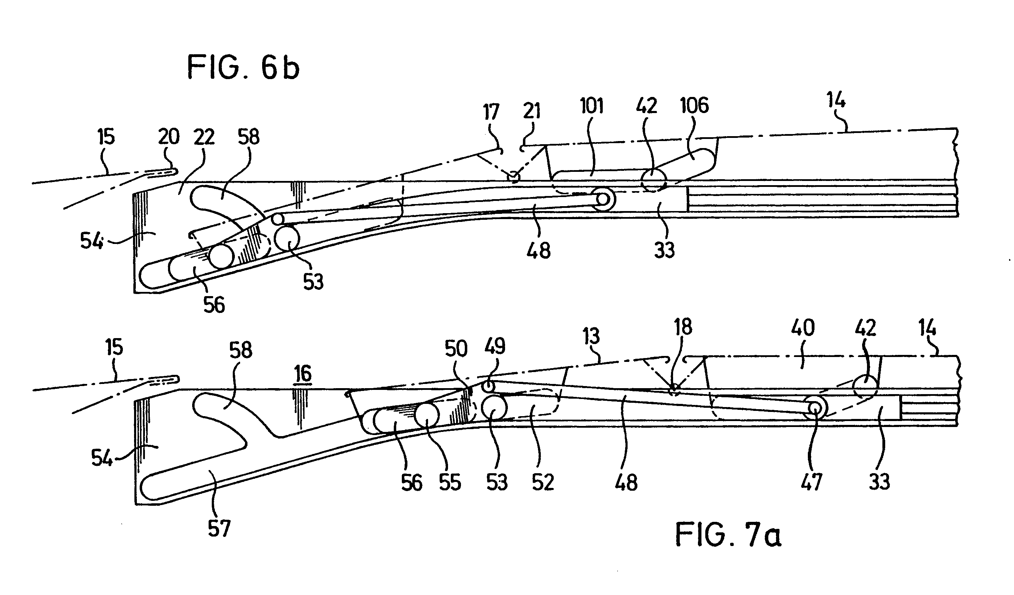

Wird ausgehend von der Deckelschließstellung das mit dem Antriebsschlitten 33 verbundene Ende des Antriebskabels 31 nach hinten bewegt, wandert der Verbindungsbolzen 42 in dem Kulissenschlitz 43 nach hinten, bis er die in Fig. 6b veranschaulichte Stellung erreicht. Das hintere Deckelteil 14 behält seine Stellung unverändert bei. Über den Stellhebel 48 wird ein Drehmoment auf den Absenkbehel 50 ausgeübt, unter dessen Einfluß der Sperrbolzen 53 sich entlang der Sperrkulisse 58 in Richtung auf die Laufbahn 57 des vorderen Einsatzteils 54 bewegt. Dadurch wird der Absenkhebel 50 um das Gelenk 55 in Fig. 5a im Uhrzeigersinn verschwenkt. Über den in das Langloch 52 eingreifenden Verbindungsbolzen 51 (Fig. 6a) wird das vordere Deckelteil 13 zu einer Schwenkbewegung um die von dem Gelenkbolzen 46 bestimmte Schwenkachse 18 veranlaßt. Die Vorderkante 19 des Deckelteils 13 wird abgesenkt, während die Hinterkante 17 des Deckelteils 13 im wesentlichen in Höhe der Vorderkante 21 des hinteren Deckelteils 14 gehalten wird.

Am vorderen Ende des Dachausschnitts 16 wird zwischen der abgesenkten Dekkelvorderkante 19 und der festen Dachhaut 15 der Lüftungsspalt 22 ausgebildet. Der Luftstrom 23 kann aus dem Wageninneren über ein dachfest angeordnetes, zweckmäßig in die vordere Querstrebe 77 des Rahmens 36 eingesetztes Lüftungsgitter 102 oder dergleichen und durch den Spalt 22 hindurch zur Außenseite gelangen. Eine mit dem Deckel 12 über einen vorderen Mitnehmer 103 verbundene Deckelabdeckung 104 deckt dabei in der Deckelschließstellung, in der Lüftungsstellung und in allen Zwischenlagen zwischen diesen beiden Stellungen eine von dem Rahmen 36 begrenzte, unterhalb des Dachausschnitts 16 liegende Rahmenöffnung 105 ab.

Im Verstellbereich zwischen Schließ- und Lüftungsstellung ist der Raststein 74 des hinteren Schlittens 62 in die Raststeinkerbe 76 des dachfesten hinteren Einsatzteils 70 eingerastet. Dadurch wird eine Verlagerung des Schlittens 62 und des mit diesem gelenkig verbundenen Ausstellhebels 63 verhindert.

Wird der Antriebsschlitten 33 weiter nach hinten bewegt, läuft der Verbindungsbolzen 42 in einen nach hinten und oben ansteigenden hinteren Abschnitt 106 des Kulissenschlitzes 43 ein, wodurch das hintere Deckelteil 14 vorne so weit abgesenkt wird, wie dies für ein Zurückschieben des Deckels 12 unter die feste Dachhaut 15 erforderlich ist. Der von dem Antriebsschlitten 33 über die Verbindungsleiste 60 mitgenommene Schieber 61 legt sich mit einem Anschlag 107 gegen das vordere Ende des hinteren Schlittens 62. Durch den Eingriff des Raststeins 74 mit einer Schrägfläche 108 der Raststeinkerbe 76 wird auf den Raststein 74 eine nach unten gerichtete Kraftkomponente ausgeübt. Der Raststein 74 verläßt die Raststeinkerbe 76 und legt sich stattdessen in die Raststeinkerbe 75 des Schiebers 61 ein. Auf diese Weise wird der hintere Schlitten 62 mit dem Schieber 61 und damit auch mit dem Antriebsschlitten 33 und dem Antriebskabel 31 auf Mitnahme gekoppelt.

Beim Zurückschieben des Schlittens 62 wird der Ausstellhebel 63 durch das Zusammenwirken der Bolzen 66 und 67 mit der Führungsbahn 69 bzw. der Nockenbahn 72 in Fig. 6c entgegen dem Uhrzeigersinn um die Achse 65 verschwenkt. Dabei wird das Deckelteil 14 über den Ausstellbolzen 66 auch hinten abgesenkt. Bei fortgesetztem Verstellen des Antriebsschlittens 33 nach hinten werden die Deckelteile 13 und 14 mitgenommen. Dabei bewegen sich der Sperrbolzen 53 und der vordere Schlitten 56 zunächst entlang der nach hinten ansteigenden Laufbahn 57 des vorderen Einsatzteils 54, um dann in die Führungsbahn 34 der Längsführung 35 überzutreten. Der Deckel 12 läßt sich als Ganzes in den nach hinten an den Dachausschnitt 16 angrenzenden Raum 24 schieben, wobei die Deckelabdeckung 104 die Rahmenöffnung 105 freigibt.

Wird anschließend der Antriebsschlitten 33 wieder nach vorne bewegt, laufen die vorstehen erläuterten Bewegungsvorgänge entsprechend in umgekehrtem Sinne ab. Wenn der Ausstellhilfsbolzen 67 auf die Nockenbahn 72 trifft, wird der Ausstellhebel 63 in Fig. 7b im Uhrzeigersinn verschwenkt, wodurch der Ausstellbolzen 66 von der Führungsbahn 34 in die Führungsbahn 69 übergeht. Der Ausstellhebel 63 wird in die in den Fign. 5b und 6c veranschaulichte aufgerichtete Lage gebracht, in welcher er an einem Anschlag 109 des hinteren Einsatzteils 70 anschlägt. Über eine Schrägfläche 110 der Raststeinkerbe 75 wird auf den Raststein 74 eine nach oben gerichtete Kraftkomponente ausgeübt. Der Raststein 74 verläßt die Raststeinkerbe 75 und legt sich stattdessen wieder in die dachfeste Raststeinkerbe 76 ein. Durch die Vorbewegung des Verbindungsbolzens 42 entlang dem Abschnitt 106 des Kulissenschlitzes 43 wird die Vorderkante 21 des hinteren Deckelteils 14 angehoben (Fig. 6b). Schließlich wird über den Stellhebel 48 und den Absenkhebel 50 der vordere Deckelteil 13 in die Schließstellung (Fig. 5a) verschwenkt.

## Ansprüche

1. Fahrzeugdach mit einem Deckel, der ein vorderes und ein hinteres Deckelteil aufweist, die in einer Schließstellung gemeinsam einen in der festen Dachhaut ausgebildeten Dachausschnitt verschließen, wobei das hintere Deckelteil entlang von zu beiden Seiten des Dachausschnittes verlaufenden Längsführungen nach hinten in eine den Dachausschnitt mindestens teilweise freilegende Offenstellung verschiebbar ist und wobei das vordere Deckelteil gegenüber dem in seiner vorderen Endstellung stehenden und mit der Dachhaut abschließenden hinteren Deckelteil in eine Lüftungsstellung verschwenkbar ist, dadurch gekennzeichnet, daß in der Lüftungsstellung die Vorderkante (19) des vorderen Deckelteils (13) unter Ausbildung eines im Bereich der Vorderkante (20) des Dachausschnittes (16) liegenden Lüftungsspaltes (22) unter die feste Dachhaut (15) abgesenkt ist, während die Hinterkante (17) des vorderen Deckelteils mindestens näherungsweise in Höhe der Vorderkante (21) des hinteren Deckelteils (14) gehalten ist.

2. Fahrzeugdach nach Anspruch 1, dadurch gekennzeichnet, daß das vordere Deckelteil (13) mit dem hinteren Deckelteil (14) derart gekoppelt ist, daß es die Verschiebebewegungen des hinteren Deckelteils in Fahrzeuglängsrichtung mitmacht.

3. Fahrzeugdach nach Anspruch 2, dadurch gekennzeichnet, daß die beiden in Fahrzeuglängsrichtung verschiebbaren Deckelteile (13, 14) im Bereich ihrer einander zugewendeten Enden gelenkig miteinander verbunden sind.

4. Fahrzeugdach nach Anspruch 3, dadurch gekennzeichnet, daß die beiden Deckelteile (13, 14) über ein nachgiebiges Dichtelement (80) untereinander verbunden sind, das sich im Bereich der einander zugewendeten Enden der Deckelteile über deren gesamte Breite erstreckt.

5. Fahrzeugdach nach Anspruch 4, dadurch gekennzeichnet, daß das Dichtelement (80) den Randspalt (81) zwischen den beiden Deckelteilen (13, 14) in allen Deckelstellungen wasserdicht abdichtet.

6. Fahrzeugdach nach Anspruch 4 oder 5, dadurch gekennzeichnet, daß das Dichtelement (80) den Randspalt (81) zwischen den beiden Deckelteilen (13, 14) verdeckt und dabei mindestens eines der einander zugewendeten Deckelteilenden untergreift.

7. Fahrzeugdach nach einem der vorhergehenden Ansprüche, dadurch gekennzeichnet, daß die beiden Deckelteile (13, 14) gemeinsam unter den an den Dachausschnitt (16) hinten angrenzenden Teil der Dachhaut (15) verschiebbar sind.

8. Fahrzeugdach nach einem der vorhergehenden Ansprüche, dadurch gekennzeichnet, daß der zweiteilige Deckel (12) eine an seinem Außenrand umlaufende Dichtung (96) trägt, die in der Schließstellung den Rand des Dachausschnitts (16) untergreift.

9. Fahrzeugdach nach Ansprüchen 3 und 8, dadurch gekennzeichnet, daß die umlaufende Dichtung (96) mit einer relativ steifen Einlage (99) versehen ist und daß die Schwenkachse (18), um welche das vordere Deckelteil (13) gegenüber dem hinteren Deckelteil (14) verschwenkbar ist, in gleicher oder nahezu gleicher Höhe wie der der Schwenkachse benachbarte Teil der Einlage (99) liegt.

10. Fahrzeugdach nach einem der vorhergehenden Ansprüche, dadurch gekennzeichnet, daß der zweiteilige Deckel (12) mindestens vorne und hinten eine Wasserrinne (98, 99) trägt, die in der Deckelschließstellung den vorderen bzw. den hinteren Rand (20, 90) des Dachausschnittes (16) untergreift.

11. Fahrzeugdach nach einem der vorhergehenden Ansprüche, dadurch gekennzeichnet, daß das vordere Deckelteil (13) mit einem Antrieb (27) ständig verbunden ist, während das hintere Deckelteil (14) mit dem Antrieb (27) über eine Totgang-Mitnehmerkupplung (Schieber 61, Schlitten 62, Raststein 74) in Verbindung steht.

12. Fahrzeugdach nach einem der vorhergehenden Ansprüche, dadurch gekennzeichnet, daß am vorderen Bereich des vorderen Deckelteils (13) beidseitig jeweils ein Absenkhebel (50) angreift, der mittels des Antriebs (27) verschwenkt werden kann und dessen von dem vorderen Deckelteil (13) abliegendes Ende an einem längsverschiebbaren Schlitten (56) angelenkt ist.

13. Fahrzeugdach nach Anspruch 12, dadurch gekennzeichnet, daß der Schlitten (56) entlang einer Bahn (Führungsbahn 34, Laufbahn 57) längsverschiebbar ist, die einen nach vorne abfallenden vorderen Abschnitt (Laufbahn 57) aufweist.

14. Fahrzeugdach nach einem der vorhergehenden Ansprüche, gekennzeichnet durch eine Verriegelungsvorrichtung (Schieber 61, Einsatzteil 70, Raststein 74), welche das hintere Deckelteil (14) in der Deckelschließstellung und während Schwenkbewegungen des vorderen Deckelteils (13) zwischen der Schließstellung und der Lüftungsstellung gegen ein Längsverschieben mit Bezug auf den Dachausschnitt (16) sichert.

15. Fahrzeugdach nach Anspruch 7, dadurch gekennzeichnet, daß am hinteren Bereich des hinteren Deckelteils (14) beidseitig jeweils ein Ausstellhebel (63) angreift, dessen von dem hinteren Deckelteil abliegendes Ende an einem Schlitten (62) angelenkt ist, der entlang der betreffenden Längsführung (35) verschiebbar geführt ist.

16. Fahrzeugdach nach Ansprüchen 11 und 15, dadurch gekennzeichnet, daß der Totgang-Mitnehmerkupplung und der Verriegelungsvorrichtung ein Raststein (74) gemeinsam ist, der in dem Schlitten (62) quer zu dessen Verschieberichtung verstellbar gelagert ist und der unter dem Einfluß des Antriebs (27) den Schlitten wechselweise in lösbare Formschlußverbindung mit einem mit dem Antrieb ständig verbundenen, entlang der Längsführung (35) verschiebbaren Schieber (61) bzw. einem dachfesten Teil (Einsatzteil 70) bringt.

17. Fahrzeugdach nach Anspruch 15 oder 16, dadurch gekennzeichnet, daß der Ausstellhebel (63) eine mindestens näherungsweise lotrechte Stellung einnimmt, solange der Deckel (12) in seiner vorderen Endstellung steht.

18. Fahrzeugdach nach einem der Ansprüche 15 bis 17, dadurch gekennzeichnet, daß der Ausstellhebel (63) mit dem Deckel (12) oder einem deckelfesten Teil (Verbindungsblech 39) über einen Bolzen (Ausstellbolzen 66) verbunden ist, der bei abgesenkter Hinterkante des hinteren Deckelteils (14) mit einer Führungsbahn (34) der Längsführung (35) in Eingriff kommt.

19. Fahrzeugdach nach einem der Ansprüche 15 bis 18, dadurch gekennzeichnet, daß der Ausstellhebel (63) einen Mitnehmer (Ausstellhilfsbolzen 67) trägt, der sich beim Vorbewegen des hinteren Dek-

kelteils (14) an eine dachfeste Nockenbahn (72) anlegt und dadurch den Ausstellhebel zu einer Ausstellbewegung zwingt.

20. Fahrzeugdach nach einem der vorhergehenden Ansprüche, dadurch gekennzeichnet, daß die Länge des vorderen Deckelteils (13) zwischen 10 und 30 %, vorzugsweise etwa 20 %, der Gesamtlänge des Deckels (12) beträgt.

FIG. 1

FIG. 2

FIG. 3

FIG. 4

EP 0 408 885 A2

FIG. 5a

FIG. 6a

FIG. 5b

FIG. 6c

FIG. 7b

FIG. 6b

FIG. 7a

13

FIG. 8a

FIG. 9

# FIG. 8b

# FIG. 10

# FIG. 11